# EUROPEAN PATENT APPLICATION

(11) **EP 4 583 424 A1**
(43) Date of publication of application: **09.07.2025**
(21) Application number: 23887416.8
(22) Date of filing: 24.05.2023
(51) Int. Cl.: H04B 7/14, H04W 36/00

(54) **SIGNAL REFLECTION DEVICE AND COMMUNICATION SYSTEM**

(30) Priority: 08.11.2022 CN 202211394420
(71) Applicant: Huawei Technologies Co., Ltd., Shenzhen, Guangdong 518129 (CN)
(72) Inventor: LI, Xin, Shenzhen, Guangdong 518129 (CN); CHEN, Xin, Shenzhen, Guangdong 518129 (CN); ZHANG, Nan, Shenzhen, Guangdong 518129 (CN)
(74) Representative: Thun, Clemens
(86) International application number: PCT/CN2023/095997
(87) International publication number: WO 2024/098717

(57) **Abstract**

This application provides a signal reflecting apparatus, including a reflection unit. The reflection unit is configured to remain in a first phase in a passive state, to receive a first radio signal and reflect the first radio signal into a second radio signal, where the second radio signal has a phase offset relative to the first radio signal. The reflection unit is further configured to switch to an active state when receiving a phase control instruction, and perform, when being in the active state, mechanical motion to switch from the first phase to a second phase. This application further provides a communication system.

## Description

### CROSS-REFERENCE TO RELATED APPLICATIONS

This application claims priority to Chinese Patent Application No. 202211394420.3, filed with the China National Intellectual Property Administration on November 8, 2022 and entitled "SIGNAL REFLECTING APPARATUS AND COMMUNICATION SYSTEM", which is incorporated herein by reference in its entirety.

### TECHNICAL FIELD

This application relates to the field of communication technologies, and in particular, to a signal reflecting apparatus and a communication system.

### BACKGROUND

Radio signals attenuate greatly when passing through obstacles. This limits coverage of the radio signals. An intelligent reflecting surface (Intelligent Reflecting Surface, IRS) optimizes the radio signals by changing propagation patterns (for example, phases) of the radio signals in space when reflecting the radio signals, so that the problem can be effectively resolved.

Currently, the IRS usually includes a plurality of photodiodes. Each photodiode has two states: on and off, and is configured to simulate two phase states: 0 and pi. A phase of the radio signal reflected by the IRS can be adjusted by adjusting a state of each photodiode. In a working process of the IRS, continuous power supply needs to be provided for the photodiode to maintain a phase state of the IRS, so that the IRS needs to include a structure that can continuously supply power. This has a high requirement on an installation position and power of the IRS, and consequently, it is difficult to widely deploy IRSs in an application environment. In addition, each photodiode has only two states: on and off, so that the photodiode can only switch between the two phases: 0 and pi. This limits diversity of phase adjustment for the radio signals. Although a quantity of phase states may be increased to some extent by cascading a plurality of photodiodes, this solution has much higher hardware requirements (high costs and high power consumption) on a circuit system of the IRS.

### SUMMARY

A first aspect of this application provides a signal reflecting apparatus, including a reflection unit, where the reflection unit is configured to remain in a first phase in a passive state, to receive a first radio signal and reflect the first radio signal into a second radio signal, where the second radio signal has a phase offset relative to the first radio signal. The reflection unit is further configured to switch to an active state when receiving a phase control instruction, and perform, when being in the active state, mechanical motion to switch from the first phase to a second phase.

The signal reflecting apparatus includes the reflection unit. The reflection unit has the active state and the passive state, where the active state is a state in which electric energy is supplied, and the passive state is a state in which no electric energy is supplied. When the reflection unit is in the passive state, the reflection unit may maintain a phase state. When the reflection unit is in the active state, the phase state is switched through mechanical motion to adjust the phase offset between the first radio signal and the second radio signal. In comparison with a technical solution in which a photodiode is used to control a phase state of the reflection unit, the reflection unit in the signal reflecting apparatus does not perform mechanical motion in the passive state, and can maintain a phase state without continuous supply of electric energy. This helps reduce power consumption of the signal reflecting apparatus. In addition, because continuous power supply is not required, it is convenient to install the signal reflecting apparatus, and a hardware requirement is lowered. Further, a manner in which the signal reflecting apparatus switches the phase state through mechanical motion is not limited to the two phase states, so that phase adjustment is more diversified.

In some embodiments, the reflection unit switches from the first phase to the second phase in a mechanical motion manner of translation or rotation.

In this way, the reflection unit switches a phase of the reflection unit in the mechanical motion manner of translation or rotation, and a specific phase of the reflection unit can be controlled by using a specific amount of translation and a specific angle of rotation. Both the specific amount of translation and the specific angle of rotation are continuously variable values, and are not limited to two values. Therefore, the manner of switching a phase state by the signal reflecting apparatus through mechanical motion is not limited to the two phase states, and phase adjustment is more diversified.

In some embodiments, the reflection unit includes a reflection assembly and an adjustment assembly.

The reflection assembly has a reflecting surface, and when the reflection unit is in the passive state, the reflecting surface is configured to receive the first radio signal and reflect the first signal into the second radio signal.

The adjustment assembly is located on a side that is of the reflection assembly and that is away from the reflecting surface, and is configured to switch the reflection unit from the first phase to the second phase through mechanical motion of the adjustment assembly or by driving the reflection assembly to perform mechanical motion.

In this way, the phase of the reflection unit can be switched through mechanical motion of the adjustment assembly or by driving the reflection assembly to perform mechanical motion. In addition, a specific amount of mechanical motion is continuously variable, and is not limited to two values, so that the manner of switching a phase state by the signal reflecting apparatus through mechanical motion is not limited to the two phase states, and phase adjustment is more diversified.

In some embodiments, the adjustment assembly is for translation to switch from the first phase to the second phase.

In this way, the phase of the reflection unit may be switched through translation of the adjustment assembly. In addition, a specific distance of translation is continuously variable, and is not limited to two values, so that the manner of switching a phase state by the signal reflecting apparatus is not limited to the two phase states, and phase adjustment is more diversified.

In some embodiments, the adjustment assembly includes a housing, a dielectric plate, and a driving motor.

The housing and the reflection assembly are enclosed to form a closed cavity, and the dielectric plate is located in the cavity.

The driving motor is connected to the dielectric plate and drives the dielectric plate to translate in the cavity to change a distance between the reflection assembly and the dielectric plate, to switch the reflection unit from the first phase to the second phase, where there is a first function relationship between the distance and the phase offset.

In this way, the distance between the reflection assembly and the dielectric plate can be changed through translation of the dielectric plate. There is the first function relationship between the distance and the phase offset between the first radio signal and the second radio signal, and a value of the distance is continuously variable. Therefore, the phase offset is also continuously variable, and a phase of the second radio signal is also continuously adjustable. In this way, the manner of switching a phase state by the signal reflecting apparatus is not limited to the two phase states, so that phase adjustment is more diversified.

In some embodiments, the reflection assembly is of a flat-plate structure, and the dielectric plate is disposed in parallel to the reflection assembly.

In this way, distances between the reflection assembly and the dielectric plate are equal.

In some embodiments, the dielectric plate and the housing include metal.

In this way, each reflection unit is equivalent to a resonant circuit. When the distance between the reflection assembly and the dielectric plate changes, it is equivalent to changing a parameter in an equation corresponding to the resonant circuit, so that the phase of the second radio signal reflected by the reflection unit can be changed.

In some embodiments, the adjustment assembly is configured to switch from the first phase to the second phase by driving the reflection assembly to rotate around a target axis, the target axis is perpendicular to a plane on which the reflection assembly is located, and there is a second function relationship between a rotation angle of the reflection assembly and the phase offset.

In this way, the phase of the reflection unit can be switched by driving rotation of the reflection assembly by the adjustment assembly. There is the second function relationship between the rotation angle and the phase offset between the first radio signal and the second radio signal, and the rotation angle is continuously variable. Therefore, the phase offset is also continuously variable, and a phase of the second radio signal is also continuously adjustable. In this way, the manner of switching a phase state by the signal reflecting apparatus is not limited to the two phase states, so that phase adjustment is more diversified.

In some embodiments, the adjustment assembly includes a driving motor, and the driving motor is fastened to the reflection assembly to drive the reflection assembly to rotate.

In some embodiments, the driving motor is a stepper motor.

The stepper motor can be easily driven to perform mechanical motion.

In some embodiments, the reflection assembly includes a substrate and a patterned structure formed on a surface of the substrate, and the patterned structure includes metal.

Each reflection unit forms a metal topology structure by using electric induction and magnetic induction of an electromagnetic wave. When the first radio signal (an electromagnetic wave) is incident, the reflection unit generates an induced current and an induced magnetic current. Magnitudes of the induced current and the induced magnetic current are related to a pattern of the metal topology structure in the reflection unit, a parameter of a physical entity, and the like. A propagation characteristic of the electromagnetic wave is accordingly regulated under a combined effect of the electric induction and magnetic induction. Different electromagnetic response features may be obtained by designing different metal topology structures. Further, any combination of electromagnetic parameters or any combination of an amplitude and a phase of a scattering field may be theoretically obtained by using a dispersion property of the metal topology structure on the electromagnetic wave.

In some embodiments, the signal reflecting apparatus further includes a control assembly, where the control assembly is electrically connected to the driving motor, and is configured to receive the phase control instruction, where the phase control instruction carries distance information or angle information.

The control assembly is further configured to control, based on the distance information, the driving motor to translate the dielectric plate, or control, based on the angle information, the driving motor to rotate the reflection assembly.

For different communication scenarios, phase requirements of the second radio signal are different. The phase requirements of the second radio signal may be learned by receiving the phase control instruction by the control assembly, and the control assembly controls, based on the phase control instruction, the driving motor to work, to obtain a second radio signal that meets the requirements.

In some embodiments, the signal reflecting apparatus includes a plurality of reflection units, and at least some of the reflection units are in a same state.

The reflection units work independently, and states of the reflection units may be the same or different. Phase states of the reflection units are separately controlled based on phase requirements of the second radio signal in a specific communication scenario.

In some embodiments, the first radio signal and the second radio signal are electromagnetic waves.

In this way, the first radio signal and the second radio signal are used in a communication system (for example, a base station and a terminal) that performs communication by using electromagnetic waves.

In some embodiments, the reflection unit is further configured to return to the passive state after switching to the second phase, and remain in the second phase in the passive state, to receive the first radio signal and reflect the first signal into a third radio signal, where a phase offset of the third radio signal relative to the first radio signal is different from the phase offset of the second radio signal relative to the first radio signal.

A manner in which the signal reflecting apparatus switches the phase state through mechanical motion is not limited to the two phase states, so that phase adjustment is more diversified.

A second aspect of this application provides a communication system, including:
a first device, configured to transmit a first signal;
the signal reflecting apparatus according to any one of the foregoing implementations, configured to receive a first radio signal, modulate a phase of the first radio signal, and reflect the first radio signal into a second radio signal; and
a second device, configured to receive the second radio signal, to communicate with the first device.

The communication system includes the signal reflecting apparatus, and the signal reflecting apparatus includes a reflection unit. The reflection unit has an active state and a passive state, where the active state is a state in which electric energy is supplied, and the passive state is a state in which no electric energy is supplied. When the reflection unit is in the passive state, the reflection unit may maintain a phase state. When the reflection unit is in the active state, the phase state is switched through mechanical motion to adjust a phase offset between the first radio signal and the second radio signal. In comparison with a technical solution in which a photodiode is used to control a phase state of the reflection unit, the reflection unit in the signal reflecting apparatus does not perform mechanical motion in the passive state, and can maintain a phase state without continuous supply of electric energy. This helps reduce power consumption of the signal reflecting apparatus. In addition, because continuous power supply is not required, it is convenient to install the signal reflecting apparatus, and a hardware requirement is lowered. Further, a manner in which the signal reflecting apparatus switches the phase state through mechanical motion is not limited to the two phase states, so that phase adjustment is more diversified.

In some embodiments, the first device is a base station, and the second device is a terminal.

In this way, the first device and the second device are used in a communication scenario in which communication is performed by using an electromagnetic wave: a communication scenario in which the base station communicates with the terminal.

In some embodiments, the terminal is configured to test a preset parameter of the second radio signal, generate a phase control instruction based on a test result, and send the phase control instruction to the signal reflecting apparatus, so that the signal reflecting apparatus switches the reflection unit from the first phase to the second phase through mechanical motion.

In this way, the terminal may test the preset parameter in real time, and notify, based on the preset parameter, the signal reflecting apparatus to switch the phase in time, so that when a communication scenario changes, the second radio signal reflected by each reflection unit may be adjusted to a phase that meets a requirement of the communication scenario in time.

### BRIEF DESCRIPTION OF DRAWINGS

FIG. 1 is a diagram of a structure of a communication system according to this application;
FIG. 2 is a diagram of a three-dimensional structure of a signal reflecting apparatus according to Embodiment 1 of this application;
FIG. 3 is a diagram of a three-dimensional structure of a reflection unit in the signal reflecting apparatus in FIG. 2;
FIG. 4 is an exploded diagram of a reflection unit in the signal reflecting apparatus in FIG. 2;
FIG. 5 is a schematic of an equivalent resonant circuit of a reflection unit in FIG. 2;
FIG. 6 is a curve chart in which a phase of a second radio signal changes with a distance between a dielectric plate and a reflection assembly;
FIG. 7 is a diagram of a three-dimensional structure of a signal reflecting apparatus according to Embodiment 2 of this application;
FIG. 8 is a diagram of a three-dimensional structure of a reflection unit in the signal reflecting apparatus in FIG. 7; and
FIG. 9 is a curve chart in which amplitudes and phase offsets of a second radio signal under different frequencies change with rotation angles.

Description of reference signs of main components:

| | |
|---|---|
| Communication system | 1 |
| Signal reflecting apparatus | 10, 40 |
| Reflection unit | 11, 41 |
| Reflection assembly | 111, 411 |
| Substrate | 1111, 4111 |
| Patterned structure | 1112, 4112 |
| Reflecting surface | S1, S2 |
| Adjustment assembly | 112, 412 |
| Housing | 1121 |
| Dielectric plate | 1122 |
| Cavity | 1123 |
| Driving motor | 1124, 4121 |
| Connecting part | 1125 |
| Control assembly | 113, 413 |
| Controller | 1131, 4131 |
| Power supply | 1132, 4132 |
| Connecting shaft | 4122 |
| First device | 20 |
| Second device | 30 |
| Target axis | L |
| Curve | Y1, Y2, Y3, Y4, Y5 |

### DESCRIPTION OF EMBODIMENTS

The following describes embodiments of this application with reference to the accompanying drawings in embodiments of this application.

### Embodiment 1

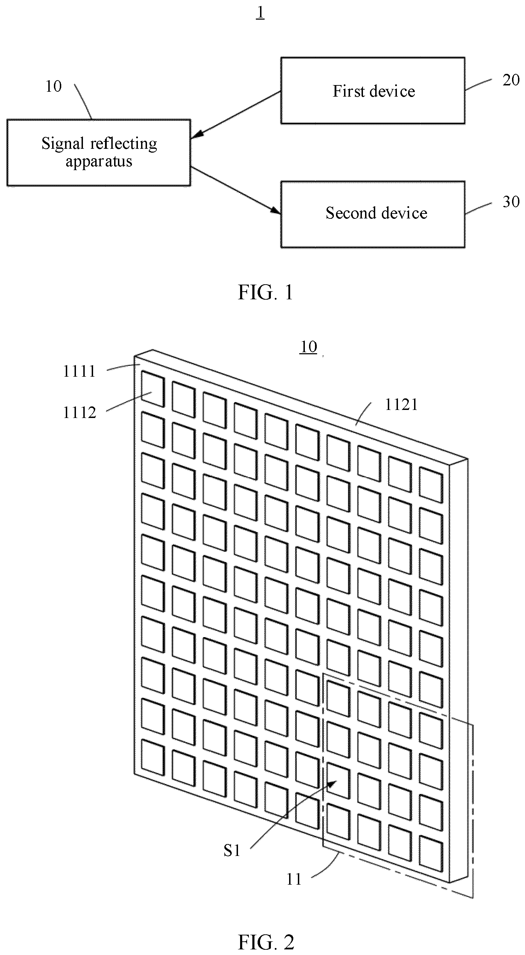

Refer to FIG. 1. A communication system 1 in this embodiment includes a signal reflecting apparatus 10, a first device 20, and a second device 30. The first device 20 is configured to transmit a first radio signal. The signal reflecting apparatus 10 is located between the first device 20 and the second device 30, and is configured to receive and reflect the first radio signal transmitted by the first device 20. The first radio signal reflected by the signal reflecting apparatus 10 is defined as a second radio signal. When reflecting the first radio signal, the signal reflecting apparatus 10 changes a phase of the first radio signal. In other words, the first radio signal and the second radio signal have different phases and there is a phase offset between the first radio signal and the second radio signal. The second device 30 is configured to receive the second radio signal reflected by the signal reflecting apparatus 10, and the first device 20 and the second device 30 may communicate with each other based on the first radio signal and the second radio signal. The signal reflecting apparatus 10 reflects the first radio signal, so that the phase of the first radio signal may be modulated, and coverage of the first radio signal may be changed. For example, when an obstacle exists in an environment in which the first device 20 and the second device 30 are located, the signal reflecting apparatus 10 is placed at a corresponding position, and the signal reflecting apparatus 10 reflects the first radio signal, so that the second radio signal reflected by the signal reflecting apparatus 10 can effectively avoid the obstacle, and the second device 30 can effectively receive the signal sent by the first device 20.

In this embodiment, the second device 30 is further configured to detect target parameters (including a second-level level value, a signal to interference plus noise ratio (Signal to Interference plus Noise Ratio, SINR) value, a rank (a RANK value) of a channel matrix, and uplink and downlink rate indicators) of the received second radio signal, calculate an optimal phase setting value (that is, an optimal phase setting value of the second radio signal) in a current scenario by using a mathematical method based on the target parameters, and generate a phase control instruction based on the phase setting value. In this embodiment, the signal reflecting apparatus 10 is configured to receive the phase control instruction, and perform mechanical motion based on the phase control instruction, to modulate the phase of the received first radio signal, so that a phase of the finally reflected second radio signal is equal to the phase setting value.

In this embodiment, the first radio signal and the second radio signal are electromagnetic waves, the signal reflecting apparatus 10 is an IRS, the first device 20 is a base station, and the second device 30 is a terminal.

Refer to FIG. 2. The signal reflecting apparatus 10 in this embodiment is a rectangular plate structure with a specific thickness as a whole. The signal reflecting apparatus 10 includes a plurality of reflection units 11. Each reflection unit 11 is also a rectangular plate structure with a specific thickness as a whole, and the reflection units 11 are closely arranged into an array with a plurality of rows and a plurality of columns. The reflection units 11 each have a reflecting surface S1, and reflecting surfaces S1 of the reflective units 11 are on a same plane.

The reflection units 11 are configured to separately receive the first radio signal and reflect the second radio signal. The reflection unit 11 forms a metal topology structure by using electric induction and magnetic induction of an electromagnetic wave. When the first radio signal (an electromagnetic wave) is incident, the reflection unit 11 generates an induced current and an induced magnetic current. Magnitudes of the induced current and the induced magnetic current are related to a pattern of the metal topology structure in the reflection unit 11, parameters of a physical entity (for example, an area of the metal topology structure, and a distance between the metal topology structure and another metal structure in the reflection unit 11), and the like. A propagation characteristic of the electromagnetic wave is accordingly regulated under a combined effect of the electric induction and magnetic induction. Different electromagnetic response features may be obtained by designing different metal topology structures. Further, any combination of electromagnetic parameters or any combination of an amplitude and a phase of a scattering field may be theoretically obtained by using a dispersion property of the metal topology structure on the electromagnetic wave.

The reflection unit 11 has a passive state and an active state. In this application, the passive state is a state in which no electric energy is supplied, and the active state is a state in which electric energy is supplied. When in the passive state, the reflection unit 11 maintains the structure, to remain in a first phase. When the reflection unit 11 is in the active state, electric energy supply enables the reflection unit 11 to perform mechanical motion, to switch the reflection unit 11 to a second phase. After the switching is completed, the electric energy is not supplied, the reflection unit 11 enters the passive state, and remains in the second phase. When the reflection unit 11 is in the first phase and the second phase, the reflection unit 11 has different modulation effects on the phase of the received first radio signal, so that in a case in which a first radio signal with a same phase is received, phases of the second radio signal reflected by the reflection unit 11 in the first phase and the second phase are different, and phase offsets between the first radio signal and the second radio signal are also different.

In other words, the reflection unit 11 maintains a phase state unchanged in the passive state, and switches the phase state in the active state, to change a modulation effect on the first radio signal by switching the phase state, and reflect the second radio signal with different phases.

Because the reflection units 11 separately and independently receive the first radio signal and reflect the second radio signal, states of the reflection units 11 are also independent, and in the signal reflecting apparatus 10, at least some of the reflection units 11 are in a same state at a same moment.

In this embodiment, structures of the reflection units 11 are almost the same. The following uses a structure of a single reflection unit 11 as an example for description.

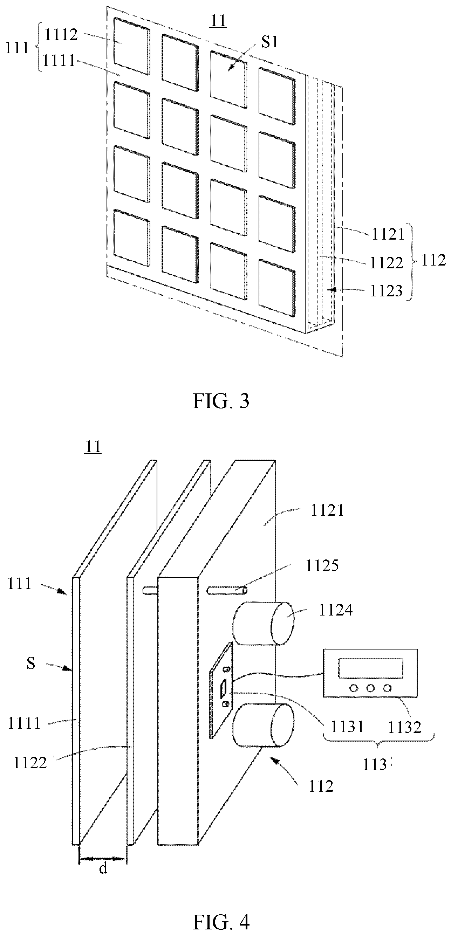

Refer to FIG. 3. The reflection unit 11 in this embodiment includes a reflection assembly 111 and an adjustment assembly 112. The reflection assembly 111 is configured to reflect the second radio signal, and the adjustment assembly 112 is configured to drive the reflection assembly 111 to perform mechanical motion or is configured to change, through mechanical motion of the adjustment assembly 112, a phase of the second radio signal reflected by the reflection unit 11, so that the phase offset between the first radio signal and the second radio signal is changed.

The reflection assembly 111 has the reflecting surface S1, and the reflecting surface S1 is a surface for receiving the first radio signal and reflecting the second radio signal. The adjustment assembly 112 is located on a side that is of the reflection assembly 111 and that is away from the reflecting surface S1, and is configured to change a phase state of the reflection unit through mechanical motion of the adjustment assembly 112.

The reflection assembly 111 includes a substrate 1111 and 16 patterned structures 1112 (that is, the foregoing metal topology structure) located on a surface of the substrate 1111. The 16 patterned structures 1112 are arranged as a 4x4 array. In another embodiment of this application, the reflection assembly 111 may include any other quantity of patterned structures 1112. The reflecting surface S1 includes a region that is not covered by the patterned structure 1112 and that is on the surface of the substrate 1111 on which the patterned structure 1112 is provided, and further includes a surface that is of each patterned structure 1112 and that is away from the substrate 1111. The patterned structure 1112 shown in FIG. 3 is a rectangular block, and is merely used as an example. The patterned structure 1112 may be, for example, a "cross"-shaped structure or any other pattern structure.

The adjustment assembly 112 includes a housing 1121 and a dielectric plate 1122. The housing 1121 and the substrate 1111 in the reflection assembly 111 are enclosed to form a cavity 1123, and the dielectric plate 1122 is located in the cavity 1123. In this embodiment, the substrate 1111 is in a sheet shape, the dielectric plate 1122 is in a sheet shape, and the substrate 1111 is disposed in parallel to the dielectric plate 1122. The housing 1121 is made of an insulating rigid material, and the dielectric plate 1122 includes metal. In this embodiment, the dielectric plate 1122 includes an insulating substrate and a copper patch formed on the surface of the substrate.

Refer to FIG. 4. The adjustment assembly 112 further includes a driving motor 1124. The driving motor is fastened on a side that is of the housing 1121 and that is away from the reflecting surface S1, and is located outside the cavity 1123. The driving motor 1124 is fastened to the dielectric plate 1122 in the cavity 1123 through a connecting part 1125 that passes through the housing 1121, and is configured to drive the dielectric plate 1122 to translate in the cavity 1123 in a direction perpendicular to the substrate 1111 (or the reflection assembly 111), to change a distance d between the substrate 1111 and the dielectric plate 1122. In this embodiment, the driving motor 1124 is a stepper motor. To achieve better moving stability, three driving stepper motors can be used for driving.

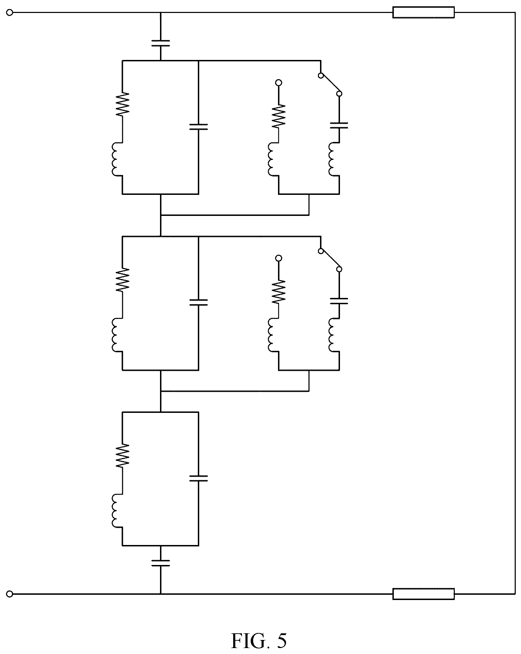

In this embodiment, a structure of the reflection unit 11 is equivalent to an equivalent resonant circuit shown in FIG. 5, and satisfies a resonance equation: 1/Q_{L}=1/Qᵢ+1/Qₑ. Changing the distance d between the substrate 1111 and the dielectric plate 1122 is equivalent to changing the parameter of the foregoing physical entity, and correspondingly, the parameters Qᵢ and Qₑ in the resonance equation may be changed, so that a modulation effect of the reflection unit 11 on the received first radio signal is changed, thereby changing the phase of the reflected second radio signal.

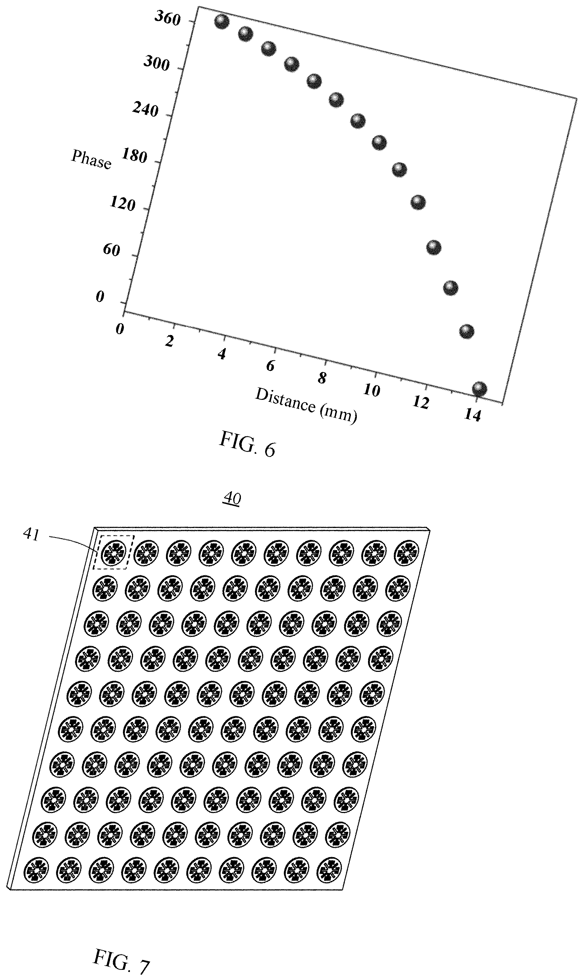

It is defined in this embodiment that there is a first function relationship between the distance d and the phase of the second radio signal. For example, the first radio signal and the second radio signal are electromagnetic waves at a 2.6 G frequency, and the first radio signal is perpendicularly incident on the reflecting surface S1. The first function relationship between the distance d and the phase of the second radio signal is shown in FIG. 6. When the frequencies of the first radio signal and the second radio signal change or incident angles change, the first function relationship may be different.

Still refer to FIG. 4. In this embodiment, the reflection unit 11 further includes a control assembly 113. The control assembly 113 includes a controller 1131 and a power supply 1132. The power supply 1132 is configured to supply electric energy. The controller 1131 is electrically connected to the power supply 1132 and the driving motor 1124 separately, and is configured to control, when the power supply 1132 supplies power to the controller 1131 (that is, when the signal reflecting apparatus is in the active state), the driving motor 1124 to drive the dielectric plate 1122 to translate in the cavity 1123. The controller 1131 may be further configured to: receive the phase control instruction generated by the second device 30, and control, based on the phase control instruction, a distance d by which the driving motor 1124 pushes the dielectric plate 1122 to translate. In this embodiment, the controller 1131 is a microcontroller (Micro Control Unit, MCU). In another embodiment, the controller 1131 may be another circuit function unit, a chip, or a chip set.

In this embodiment, the second phase is another phase state different from the first phase, and is not used to limit the reflection unit 11 to have only two phase states (or referred to as two physical states): the first phase and the second phase. In this application, the reflection unit 11 may be switched between a plurality of phase states. For example, the reflection unit 11 is further configured to return to the passive state after being switched to the second phase, and remain in the second phase in the passive state, to receive the first radio signal and reflect the first signal into a third radio signal. A phase offset of the third radio signal relative to the first radio signal is different from the phase offset of the second radio signal relative to the first radio signal.

The signal reflecting apparatus 10 in this embodiment includes a plurality of reflection units 11, and each reflection unit 11 is in a passive state or an active state in a time division manner. The reflection unit 11 may maintain a phase state when being in the passive state. In comparison with a technical solution of maintaining a phase state by using a photodiode, the signal reflecting apparatus 10 in this embodiment does not need continuous electric energy supply when maintaining the phase state. This is conducive to reducing power consumption and has a low requirement on a hardware condition of the signal reflecting apparatus 10. In addition, when the reflection unit 11 is in the active state, the phase state may be changed in a mechanical motion manner of translation of the dielectric plate 1122 in the adjustment assembly 112, and a translated distance may be changed based on different phases of the second radio signal. The translated distance is continuously variable. Therefore, the reflection unit 11 may adapt to the second radio signal with a plurality of phases. In comparison with the technical solution of changing a phase state by using a photodiode, this embodiment is not limited to two phase states, so that the phases of the second radio signal can be more diversified, and requirements of more scenarios can be met.

### Embodiment 2

Refer to FIG. 7. A signal reflecting apparatus 40 in this embodiment includes a plurality of reflection units 41. A main difference between the signal reflecting apparatus 40 and the signal reflecting apparatus 10 in Embodiment 1 lies in that the reflection unit 41 in the signal reflecting apparatus 40 in this embodiment and the reflection unit 11 in Embodiment 1 have different mechanical structures and motion manners.

The following mainly describes the difference.

In this embodiment, an arrangement manner of the reflection units 41 is the same as an arrangement manner of the reflection units 11 in Embodiment 1, and details are not described again. In this embodiment, structures of the reflection units 41 are basically the same. The following uses a structure and a working principle of one of the reflection units 41 as an example for description.

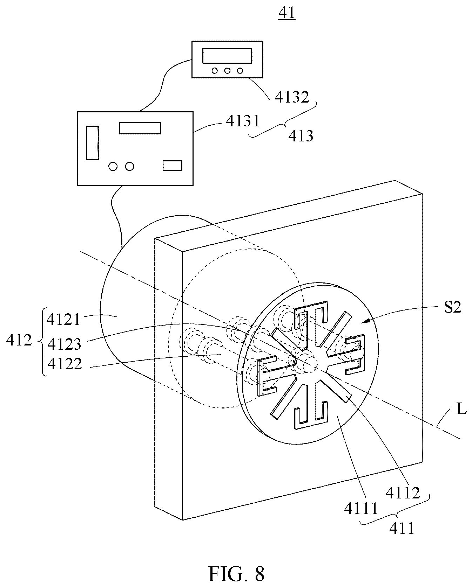

Refer to FIG. 8. In this embodiment, the reflection unit 41 includes a reflection assembly 411 and an adjustment assembly 412. A mechanical motion manner of the reflection unit 41 is that the adjustment assembly 412 drives the reflection assembly 411 to rotate around a target axis L.

In this embodiment, the reflection assembly 411 in each reflection unit 41 has a reflecting surface S2, and the reflecting surface S2 is a surface configured to receive a first radio signal and reflect a second radio signal. The adjustment assembly 412 is located on a side that is of the reflection assembly 411 and that is away from the reflecting surface S2, and is configured to switch the reflection unit 41 from a first phase to a second phase by driving the reflection assembly 411 to rotate around the target axis L. The target axis L is perpendicular to a plane on which the reflection assembly 411 is located, that is, is perpendicular to the reflecting surface S2.

In this embodiment, the reflection assembly 411 includes a substrate 4111 and a patterned structure 4112 located on a surface of the substrate 4111. In this embodiment, the substrate 4111 is a circular sheet, and the patterned structure 4112 is a rotationally symmetric pattern. In another embodiment of this application, the reflection assembly 411 may include any other quantity of patterned structures 4112. The reflecting surface S2 includes a region that is not covered by the patterned structure 4112 and that is on the surface of the substrate 4111 on which the patterned structure 4112 is provided, and further includes a surface that is of each patterned structure 4112 and that is away from the substrate 4111. The patterned structure 4112 shown in FIG. 7 is merely an example.

The adjustment assembly 412 includes a driving motor 4121 and a connecting shaft 4122. In this embodiment, the driving motor 1124 is a stepper motor. The driving motor 4121 is movably connected to the connecting shaft 4122 by using a connector adapter 4123, and the connecting shaft 4122 is fastened to the substrate 4111 in the reflection assembly 411 by using a screw 4124. The driving motor 4121 drives the connecting shaft 4122 to rotate, so that the connecting shaft 4122 can drive the reflection assembly 411 to rotate synchronously.

A phase control instruction carries angle information, and a rotation angle of the reflection assembly 411 is controlled by using the phase control instruction, so that a phase of a second radio signal reflected by the reflection unit 41 can be controlled, and a phase offset between the first radio signal and the second radio signal can also be controlled. In this embodiment, there is a second function relationship between the rotation angle and the phase offset.

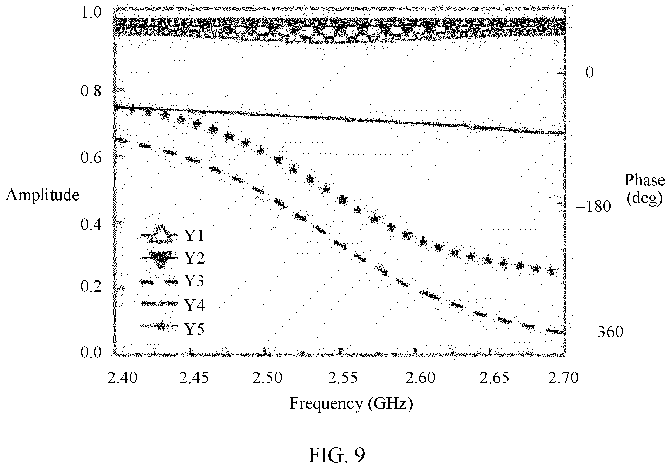

As an example, it is defined in this embodiment that the reflection unit 41 has a first rotation angle and second rotation angle. For the second function relationship, refer to FIG. 9. In FIG. 9, a horizontal coordinate indicates a frequency of the first radio signal and a frequency of the second radio signal (the first radio signal and the second radio signal have a same frequency), and vertical coordinates respectively indicate an amplitude and a phase of the second radio signal. A curve Y1 and curve Y2 in FIG. 9 respectively represent trends of an amplitude of the second radio signal changing with a frequency when the reflection unit 41 is at the first rotation angle and at the second rotation angle. It can be learned from directions of the curve Y1 and curve Y2 that, when the frequency is fixed, the change of the rotation angle has very limited impact on the amplitude. A curve Y3 and curve Y4 respectively represent trends of a phase of the second radio signal changing with a frequency when the reflection unit 41 is at the first rotation angle and at the second rotation angle, and a curve Y5 represents a trend of the phase offset between the first radio signal and the second radio signal changing with a frequency.

In this embodiment, the reflection unit 41 further includes a control assembly 413. The control assembly 413 includes a controller 4131 and a power supply 4132. The control assembly 413 is, for example, the control assembly 113 in Embodiment 1.

The signal reflecting apparatus 40 in this embodiment includes a plurality of reflection units 41, and each reflection unit 41 is in a passive state or an active state in a time division manner. The reflection unit 41 may maintain a phase state when being in the passive state. In comparison with a technical solution of maintaining a phase state by using a photodiode, the signal reflecting apparatus 40 in this embodiment does not need continuous electric energy when maintaining the phase state. This is conducive to reducing power consumption and has a low requirement on a hardware condition of the signal reflecting apparatus 40. In addition, when the reflection unit 41 is in the active state, the phase state may be changed in a mechanical motion manner in which the adjustment assembly 412 drives the reflection assembly 411 to rotate, and a rotation angle may be changed based on different phases of the second radio signal. The rotation angle is continuously variable. Therefore, the reflection unit 41 may adapt to the second radio signal with a plurality of phases. In comparison with the technical solution of changing a phase state by using a photodiode, this embodiment is not limited to two phase states, so that the phases of the second radio signal can be more diversified, and requirements of more scenarios can be met.

A person of ordinary skill in the art should be aware that the foregoing implementations are merely used to describe the present invention, but are not intended to limit the present invention. Appropriate modifications and variations made to the foregoing embodiments shall fall within the protection scope of the present invention provided that the modifications and variations fall within the substantive scope of the present invention.

## Claims

1. A signal reflecting apparatus, comprising a reflection unit, wherein
the reflection unit is configured to remain in a first phase in a passive state, to receive a first radio signal and reflect the first radio signal into a second radio signal, wherein the second radio signal has a phase offset relative to the first radio signal; and
the reflection unit is further configured to switch to an active state when receiving a phase control instruction, and perform, when being in the active state, mechanical motion to switch from the first phase to a second phase.

2. The signal reflecting apparatus according to claim 1, wherein the reflection unit switches from the first phase to the second phase in a mechanical motion manner of translation or rotation.

3. The signal reflecting apparatus according to claim 1 or 2, wherein the reflection unit comprises a reflection assembly and an adjustment assembly;
the reflection assembly has a reflecting surface, and when the reflection unit is in the passive state, the reflecting surface is configured to receive the first radio signal and reflect the first signal into the second radio signal; and
the adjustment assembly is located on a side that is of the reflection assembly and that is away from the reflecting surface, and is configured to switch the reflection unit from the first phase to the second phase through mechanical motion of the adjustment assembly or by driving the reflection assembly to perform mechanical motion.

4. The signal reflecting apparatus according to claim 3, wherein the adjustment assembly is for translation to switch from the first phase to the second phase.

5. The signal reflecting apparatus according to claim 4, wherein the adjustment assembly comprises a housing, a dielectric plate, and a driving motor;
the housing and the reflection assembly are enclosed to form a closed cavity, and the dielectric plate is located in the cavity; and
the driving motor is connected to the dielectric plate and drives the dielectric plate to translate relative to the reflection assembly in the cavity, to change a distance between the reflection assembly and the dielectric plate, to switch the reflection unit from the first phase to the second phase, wherein there is a first function relationship between the distance and the phase offset.

6. The signal reflecting apparatus according to claim 5, wherein the reflection assembly is of a flat-plate structure, and the dielectric plate is disposed in parallel to the reflection assembly.

7. The signal reflecting apparatus according to claim 5 or 6, wherein the reflection assembly, the dielectric plate, and the housing comprise metal.

8. The signal reflecting apparatus according to claim 3, wherein the adjustment assembly is configured to switch from the first phase to the second phase by driving the reflection assembly to rotate around a target axis, wherein the target axis is perpendicular to a plane on which the reflection assembly is located, and there is a second function relationship between a rotation angle of the reflection assembly and the phase offset.

9. The signal reflecting apparatus according to claim 8, wherein the adjustment assembly comprises a driving motor, and the driving motor is fastened to the reflection assembly to drive the reflection assembly to rotate.

10. The signal reflecting apparatus according to any one of claims 3 to 9, wherein the reflection assembly comprises a substrate and a patterned structure formed on a surface of the substrate, and the patterned structure comprises metal.

11. The signal reflecting apparatus according to any one of claims 5 to 7 and claims 9 and 10, wherein the driving motor is a stepper motor.

12. The signal reflecting apparatus according to claim 11, further comprising a control assembly, wherein the control assembly is electrically connected to the driving motor, and is configured to receive the phase control instruction, wherein the phase control instruction carries distance information or angle information; and
the control assembly is further configured to control, based on the distance information, the driving motor to translate the dielectric plate, or control, based on the angle information, the driving motor to rotate the reflection assembly.

13. The signal reflecting apparatus according to any one of claims 1 to 12, wherein the signal reflecting apparatus comprises a plurality of reflection units, and in a same time period, at least some of the reflection units are in a same state.

14. The signal reflecting apparatus according to any one of claims 1 to 13, wherein the first radio signal and the second radio signal are electromagnetic waves.

15. The signal reflecting apparatus according to any one of claims 1 to 14, wherein the reflection unit is further configured to return to the passive state after switching to the second phase, and remain in the second phase in the passive state, to receive the first radio signal and reflect the first signal into a third radio signal, wherein a phase offset of the third radio signal relative to the first radio signal is different from the phase offset of the second radio signal relative to the first radio signal.

16. A communication system, comprising:
a first device, configured to transmit a first signal;
the signal reflecting apparatus according to any one of claims 1 to 15, configured to receive the first radio signal, modulate a phase of the first radio signal, and reflect the first radio signal into a second radio signal; and
a second device, configured to receive the second radio signal, to communicate with the first device.

17. The communication system according to claim 16, wherein the first device is a base station, and the second device is a terminal.

18. The communication system according to claim 17, wherein the terminal is configured to test a preset parameter of the second radio signal, generate a phase control instruction based on a test result, and send the phase control instruction to the signal reflecting apparatus, so that the signal reflecting apparatus switches the reflection unit from the first phase to the second phase through mechanical motion.
